# EUROPÄISCHE PATENTANMELDUNG

(11) **EP 2 727 474 A1**
(43) Veröffentlichungstag der Anmeldung: **07.05.2014**
(21) Anmeldenummer: 13186284.9
(22) Anmeldetag: 27.09.2013
(51) Int. Cl.: A23L 1/317, A21D 13/00

(54) **Wurstspeise**

(30) Priorität: 31.10.2012 DE 102012021304
(71) Anmelder: Ovofit Eiprodukte GmbH, 84494 Neumarkt-St. Veit (DE)
(72) Erfinder: Oermann, Manfred, 32278 Kirchlengern (DE)
(74) Vertreter: Rothkopf, Ferdinand

(57) **Zusammenfassung**

Bei einer Wurstspeise mit einer länglichen Wurst, die in einer Teighülle aufgenommen ist, wird die Teighülle mittels einer Teigschicht hergestellt, die am Längsbereich der Wurst um diese herum gelegt ist und von der an mindestens einem der Endbereiche der Wurst mindestens zwei Teilflächen aneinander gelegt sind.

## Beschreibung

Die Erfindung betrifft eine Wurstspeise mit einer länglichen Wurst, die in einer Teighülle aufgenommen ist. Ferner betrifft die Erfindung ein Verfahren zum Herstellen einer derartigen Wurstspeise.

Wurstspeisen, bei denen eine längliche Wurst in einer Teighülle aufgenommen ist, sind in vielfältiger Weise insbesondere als Fertiggericht oder Halbfertiggericht bekannt. So wird z.B. in DE 10 2006 006 084 A1 ein Gebäck mit einem Teigling beschrieben, in dem eine Wurst aufgenommen und zusammen mit diesem gebackenen ist. Die Wurst wird dazu ohne Haut hergestellt, mit Teig umgeben und anschließend dieser Teigling einschließlich der darin aufgenommen Wurst gebacken.

Ziel der Herstellung von derartigen Wurstspeisen ist es, eine besonders schmackhafte und zugleich leicht zu verspeisende Wurstspeise zu schaffen. Insbesondere ist es das Ziel der vorliegenden Erfindung eine Wurstspeise zu schaffen, bei der hinsichtlich der darin enthaltenen Wurst und zugehöriger Beigaben weitgehende Freiheiten bestehen.

### Erfindungsgemäße Lösung

Diese Aufgabe ist erfindungsgemäß mit einer Wurstspeise gemäß Anspruch 1 und einem Verfahren gemäß Anspruch 7 gelöst. Vorteilhafte Weiterbildungen der erfindungsgemäßen Lösung sind in den abhängigen Ansprüchen beschrieben.

Gemäß der Erfindung ist eine Wurstspeise mit einer länglichen Wurst geschaffen, die in einer Teighülle aufgenommen ist, wobei die Teighülle mittels einer Teigschicht hergestellt ist, die am Längsbereich der Wurst um diese herum gelegt ist und von der an mindestens einem der Endbereiche der Wurst mindestens zwei Teilflächen aneinander gelegt sind.

Bei der erfindungsgemäßen Wurstspeise ist eine Wurst von einer flächigen Teigschicht umgeben, die um die Wurst herum gelegt worden ist. Die sich damit ergebende Teigrolle ist an mindestens einem der Endbereiche der Wurst dadurch verschlossen worden, dass mindestens zwei Teilflächen der gerollten Teigschicht gegeneinander gelegt worden sind. Die derart aneinander angelegten Teilflächen der Teigschicht verkleben aneinander und bilden somit eine im zugehörigen Bereich geschlossen Teighülle. Innerhalb der Teighülle besteht hinsichtlich des dortigen Inhalts bzw. der dortigen Füllung zugleich weitgehende Freiheit. So kann insbesondere bei der erfindungsgemäßen Wurstspeise innerhalb der Teighülle eine herkömmliche, fertig hergestellte Wurst auch mit ihrer Wursthaut angeordnet werden.

Die erfindungsgemäß aneinander angelegten Teilflächen der Teigschicht an mindestens einem Endbereich der länglichen Teighülle verschließen diese Teighülle zu einer Art flächigen Tasche. Die Tasche umgibt insbesondere die darin enthaltene Wurst vollständig, so dass diese insbesondere weitgehend dicht umschlossen ist. Der dabei mit den aneinander angelegten Teilflächen geschaffene Anlagebereich weist vorteilhaft eine Breite zwischen 0,1 cm und 1,0 cm, besondere bevorzugt zwischen 0,2 cm und 0,5 cm auf.

Außer der genannten Wurst können dabei auch noch weitere Inhaltstoffe, wie insbesondere eine Sauce in die Teighülle dosiert sein. Besonders bevorzugt wird in die erfindungsgemäße Teighülle außer der Wurst eine, insbesondere pastöse Currysauce gegeben. Darüber hinaus können an Stelle der Wurst oder zusätzlich zur Wurst auch andere Inhaltsstoffe gewählt werden. Bevorzugt werden dabei pastöse, zähflüssige Lebensmittel, wie Ketchup oder Senf, oder kleingehackte Lebensmittel, wie Zwiebeln oder Gurken, verwendet.

Zugleich bilden die aneinander gelegten Teilflächen der Teigschicht eine längliche Naht, an der es insbesondere keine Anhäufung von Teig gibt. Die derart erfindungsgemäß hergestellte Teignaht kann daher in einem nachfolgenden Garungsprozess zusammen mit der restlichen Teighülle besonders vorteilhaft gegart, insbesondere gebacken werden. Die aneinander gelegten Teilflächen dichten zugleich gegeneinander gut ab, was dadurch vorteilhaft verbessert werden kann, dass zumindest eine der Teilflächen vor ihrem Anlegen mit Wasser befeuchtet wird.

Vorteilhaft sind an dem mindestens einen Endbereich der Wurst genau zwei Teilflächen der Teigschicht aufeinander gelegt. Die beiden derart aufeinander gelegten Teilflächen bilden als eine obere Teilfläche auf einer unteren Teilfläche eine weitgehend geradlinige, insbesondere horizontale Naht. Diese Naht kann einfach hergestellt und auch in einer Qualitätsüberwachung hinsichtlich ihrer Form und Funktion gut kontrolliert werden. Darüber hinaus ergibt sich mit einer derartigen Naht eine optisch besonders ansprechende Form der erfindungsgemäßen Wurstspeise, was hinsichtlich des angestrebten Markterfolges sicherlich ebenfalls von Bedeutung ist.

Besonders bevorzugt sind bei der erfindungsgemäßen Wurstspeise an dem Längsbereich der Wurst zwei weitere Teilflächen der Teigschicht aufeinander gelegt. Mit den derart aufeinander gelegten Teigschichten ist die Längsseite der erfindungsgemäßen Teighülle abgedichtet. Die Teigschicht umgibt dabei die Wurst ringförmig und die beiden Teilflächen sind vorzugsweise so aufeinandergelegt, dass die Außenseite bzw. die von der Wurst abgewandte Seite der einen Teilfläche auf der Innenseite bzw. auf der der Wurst zugewandten Seite der anderen Teilfläche aufliegt. Der damit gebildete Überlappungsbereich der beiden Teilflächen weist vorteilhaft eine Breite zwischen 0,3 cm und 1,5 cm, besonders bevorzugt zwischen 0,7 cm und 1,1 cm auf.

Die beiden Teilflächen der Teigschicht an dem Längsbereich der Wurst sind bevorzugt aufeinander gelegt worden, bevor an dem mindestens einen Endbereich der Wurst die mindestens zwei Teilflächen der Teigschicht aneinander gelegt worden sind. Mit der derartigen Vorgehensweise kann die erfindungsgemäße Wurstspeise besonders vorteilhaft maschinell hergestellt werden. Dabei wird zunächst die Längsseite der Teighülle verschlossen, bevor nachfolgend auch die Endbereiche wie beschrieben verschlossen werden. Damit kann ein zusätzlich zur Wurst dosiertes Lebensmittel, wie insbesondere Currysauce, besonders gut während des Herstellungsprozesses in die Teighülle mit eingeschlossen werden.

Die beiden aufeinander gelegten Teilflächen der Teigschicht an dem Längsbereich der Wurst, welche wie erläutert eine Längsnaht bilden, befinden sich besonders bevorzugt an einer Auflageseite der Wurstspeise, mit der diese in einer zugehörigen Verpackung aufliegt. Diese Auflageseite wird in der Regel die Unterseite der Wurstspeise sein. Die derartige Längsnaht ist also an der Unterseite der erfindungsgemäßen Wurstspeise angeordnet, wo sie dann in der Verpackung von außen und insbesondere von oben her nicht sichtbar ist. Die derartige Wurstspeise präsentiert sich für einen Käufer in der Verpackung damit besonders ansprechend. Zugleich ist die Längsnaht an der Unterseite mit dem Gewicht der dann auf ihr ruhenden Wurstspeise sowie der eingeschlossenen Wurst besonders gut abgedichtet.

Wie bereits erwähnt wird die derartige Teighülle insbesondere vorteilhaft dazu genutzt, um darin außer der genannten Wurst auch eine Sauce aufzunehmen. Die Sauce ist dabei vorteilhaft im Vergleich zu herkömmlichen Saucen dickflüssiger bzw. zäher gestaltet, wodurch die Gefahr eines Herausströmens aus der Teighülle weiter reduziert ist.

In Entsprechung zu einer derartigen Wurstspeise ist die Erfindung auch auf ein Verfahren zum Herstellen einer Wurstspeise, mit den folgenden Schritten gerichtet: Bereitstellen einer Teigschicht und einer länglichen Wurst, Auflegen der Wurst auf die Teigschicht, Herumlegen der Teigschicht um die Wurst an deren Längsbereich und Aneinanderlegen mindestens zweier Teilflächen der Teigschicht an mindestens einem der Endbereiche der Wurst. Mit dem derartigen Verfahren kann wie oben erläutert insbesondere eine insgesamt dichte, geschlossene Teighülle gestaltet werden, in der dann eine auch flüssige, insbesondere zähflüssige Füllung enthalten sein kann. Die Wurstspeise kann von einem Verbraucher an der Teighülle gut gehalten und als solches auch ohne Besteck gegessen werden.

Bei dem derartigen erfindungsgemäßen Verfahren erfolgt vorteilhaft das Auflegen der Wurst auf die ausgelegte Teigschicht manuell bzw. von Hand oder automatisch aus einem Magazin heraus, nachdem auf der ausgelegten Teigschicht maschinell eine Markierung für die Position der Wurst gemacht worden ist. Insgesamt ergibt sich damit ein sehr vorteilhafter halbautomatisierter Prozess. Das Dosieren von Sauce kann dann vorzugsweise wieder maschinell insbesondere zu der bereits auf die Teigschicht aufgelegten Wurst erfolgen.

Beim Aneinanderlegen der mindestens zwei Teilflächen an mindestens einem der Endbereiche der Wurst werden wie erläutert vorteilhaft genau zwei Teilflächen der Teigschicht aufeinandergelegt.

Ferner werden beim Herumlegen der Teigschicht um die Wurst an deren Längsbereich vorzugsweise zwei weitere Teilflächen der Teigschicht aufeinander gelegt. Schließlich erfolgt vorzugsweise das Herumlegen der Teigschicht um die Wurst an deren Längsbereich zeitlich vor dem Aneinanderlegen der mindestens zwei Teilflächen der Teigschicht an dem mindestens einen Endbereich der Wurst. Das derartige Herstellungsverfahren für die erfindungsgemäße Wurstspeise umfasst dann insbesondere die Schritte: Herumlegen der Teigschicht um die Wurst sowie Umdrehen der Teigschicht mitsamt der darin eingerollten Wurst, bis sich die Längsnaht der Teigschicht an der Unterseite der Wurstspeise befindet. Nachfolgend geschieht dann das Aneinanderlegen der Teilflächen am Endbereich der Wurstspeise, wobei dieses Aneinanderlegen insbesondere durch Niederdrücken der dann oberen Teilfläche der Teigschicht auf die dann untere Teilfläche der Teigschicht geschieht.

### Kurzbeschreibung der Zeichnungen

Nachfolgend wird ein Ausführungsbeispiel einer erfindungsgemäßen Lösung anhand der beigefügten schematischen Zeichnungen näher erläutert. Es zeigt:

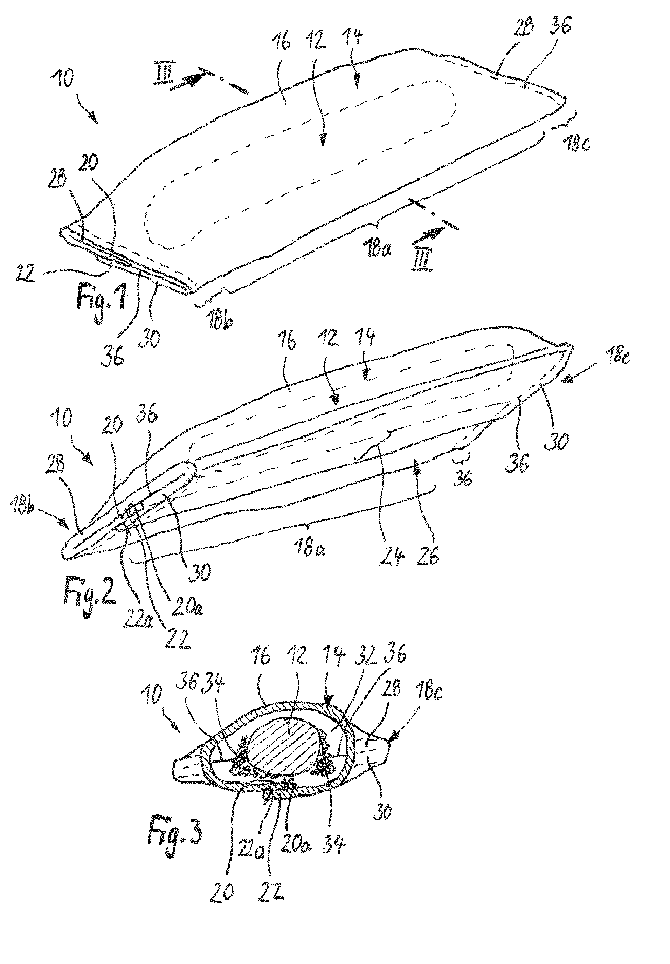

Fig. 1 eine perspektivische Oberansicht einer Wurstspeise gemäß der Erfindung,
Fig. 2 eine perspektivische Unteransicht der Wurstspeise gemäß Fig. 1 und
Fig. 3 den Schnitt III - III gemäß Fig. 1.

### Detaillierte Beschreibung des Ausführungsbeispiels

In den Fig. ist eine Wurstspeise 10 dargestellt, bei der eine längliche, im Wesentlichen zylindrische Wurst 12 mit gerundeten Enden in einer Teighülle 14 aufgenommen ist. Die Teighülle 14 ist von einer Teigschicht 16 gebildet, welche die Wurst 12 in der Art einer flächigen oder runden Tasche umgibt.

Die Teigschicht 16 ist dazu am Längsbereich 18a der Wurst 12 um diese herum gelegt, wobei sich die Enden der Teigschicht 16 an Teilflächen 20 und 22 überlappen. Diese Teilflächen 20 bzw. 22 sind so aufeinandergelegt, dass die Außenseite 20a bzw. die von der Wurst 12 abgewandte Seite der Teilfläche 20 auf der Innenseite 22a bzw. auf der der Wurst 12 zugewandten Seite der anderen Teilfläche 22 aufliegt. Die Teilflächen 20 und 22 bilden so einen Überlappungsbereich 24 von ca. 0,8 cm Breite, der sich über die gesamte Länge der Teighülle 14 entlang der Längserstreckung der Wurst 12 an der Unterseite 26 der Wurstspeise 10 erstreckt. Der Überlappungsbereich 24 bildet damit eine Längsnaht, welche sich an der mit der Unterseite 26 gebildeten Auflageseite der Wurstspeise 10 in einer weiter nicht dargestellten Verpackung befindet.

Die Teighülle 14 ist ferner dadurch gebildet, dass an den beiden Endbereichen 18b und 18c der Wurst 12 je eine obere Teilflächen 28 der Teigschicht 16 auf eine untere Teilfläche 30 der Teigschicht 16 gelegt und dabei vorzugsweise zusätzlich leicht angepresst ist. Die derart aufeinander gelegten Teilflächen 28 und 30 bilden an den stirnseitigen Enden der Wurstspeise 10 je eine weitgehend geradlinige und horizontal verlaufende Quernaht, mit der die Teighülle 14 an den Endbereichen 18b und 18c der Wurst 12 abgedichtet ist.

In einem damit im Inneren der Teighülle 14 gebildeten Innenraum 32 befindet sich neben der Wurst 12 insbesondere noch eine dickflüssige Currysauce 34, welche dort vor dem Umwickeln der Wurst 12 mit der Teigschicht 16 hineindosiert worden sein kann.

Die derartige Wurstspeise 10 ist hergestellt worden, indem zunächst die Teigschicht 16 vollflächig maschinell ausgelegt worden ist. Auf der Teigschicht 16 ist maschinell eine (nicht dargestellte) Markierung gemacht worden, auf die danach manuell oder automatisch aus einem Magazin die Wurst 12 aufgelegt und dann insbesondere maschinell die Currysauce 34 dosiert worden ist.

Nachfolgend ist die Teigschicht 16 um die Wurst 12 und Currysauce 34 herumgelegt und an dem Überlappungsbereich 24 verschlossen worden.

Die Wurstspeise 10 befand sich dabei derart in der zugehörigen Herstellungseinrichtung, dass der Überlappungsbereich 24 zunächst an ihrer oberen Seite hergestellt wurde. Nachfolgend wurde die Wurstspeise 10 in der Herstellungseinrichtung gedreht, bis sich der Überlappungsbereich 24 wie in den Fig. dargestellt an der Unterseite 26 befand.

Danach wurden mit einer Führungs- und Anpresseinrichtung die oberen und unteren Teilflächen 28 sowie 30 gegeneinander angelegt und insbesondere gegeneinander angepresst, um an den stirnseitigen Enden der dann fertigen Wurstspeise 10 wie oben erläutert je einen Anlagebereich 36 mit einer Breite von ca. 0,3 cm herzustellen.

Die derart hergestellte Wurstspeise 10 dient insbesondere als halbfertiges Lebensmittel, welches in einem nachfolgenden Garungsprozess fertig gegart, insbesondere fertig gebacken wird. Alternativ kann die Wurstspeise 10 als Lebensmittel innerhalb ihrer Fertigungsstätte fertig gegart oder gebacken werden, so dass sie vom Konsumenten nachfolgend nur noch aufgewärmt werden muss. Ferner bietet sich die derartige Wurstspeise 10 als kalt zu verzehrendes Lebensmittel an.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Wurstspeise
- 12: Wurst
- 14: Teighülle
- 16: Teigschicht
- 18a: Längsbereich der Wurst
- 18b: Endbereich der Wurst
- 18c: Endbereich der Wurst
- 20: Teilfläche
- 20a: Außenseite der Teilfläche
- 22: Teilfläche
- 22a: Innenseite der Teilfläche
- 24: Überlappungsbereich
- 26: Unterseite der Wurstspeise
- 28: obere Teilfläche
- 30: untere Teilfläche
- 32: Innenraum
- 34: Currysauce
- 36: Anlagebereich

## Patentansprüche

1. Wurstspeise (10) mit einer länglichen Wurst (12), die in einer Teighülle (14) aufgenommen ist, wobei die Teighülle (14) mittels einer Teigschicht (16) hergestellt ist, die am Längsbereich (18a) der Wurst (12) um diese herum gelegt ist und von der an mindestens einem der Endbereiche (18b, 18c) der Wurst (12) mindestens zwei Teilflächen (28, 30) aneinander gelegt sind.

2. Wurstspeise nach Anspruch 1,
bei der an dem mindestens einen Endbereich (18b, 18c) der Wurst (12) genau zwei Teilflächen (28, 30) der Teigschicht (16) aufeinander gelegt sind.

3. Wurstspeise nach Anspruch 1 oder 2,
bei der an dem Längsbereich (18a) der Wurst (12) zwei weitere Teilflächen (20, 22) der Teigschicht (16) aufeinander gelegt sind.

4. Wurstspeise nach Anspruch 3,
bei der die beiden Teilflächen (20, 22) der Teigschicht (16) an dem Längsbereich (18a) der Wurst (12) aufeinander gelegt sind, bevor an dem mindestens einen Endbereich (18b, 18c) der Wurst (12) die mindestens zwei Teilflächen (28, 30) der Teigschicht (16) aneinander gelegt sind.

5. Wurstspeise nach Anspruch 3 oder 4,
bei dem sich die beiden aufeinander gelegten Teilflächen (28, 30) der Teigschicht (16) an dem Längsbereich (18a) der Wurst (12) an einer Auflageseite (26) der Wurstspeise (10) in einer zugehörigen Verpackung befinden.

6. Wurstspeise nach einem der Ansprüche 1 bis 5,
bei der sich in der mit der Teigschicht (16) gebildeten Teighülle (14) eine Sauce (34) befindet.

7. Verfahren zum Herstellen einer Wurstspeise (10), mit den Schritten:
Bereitstellen einer Teigschicht (16) und einer länglichen Wurst (12),
Auflegen der Wurst (12) auf die Teigschicht (16),
Herumlegen der Teigschicht (16) um die Wurst (12) an deren Längsbereich (18a) und
Aneinanderlegen mindestens zweier Teilflächen (28, 30) der Teigschicht (16) an mindestens einem der Endbereiche (18b, 18c) der Wurst (12).

8. Verfahren nach Anspruch 7,
bei dem beim Aneinanderlegen der mindestens zwei Teilflächen (28, 30) an mindestens einem der Endbereiche (18b, 18c) der Wurst (12) genau zwei Teilflächen (28, 30) der Teigschicht (16) aufeinandergelegt werden.

9. Verfahren nach Anspruch 7 oder 8,
bei dem beim Herumlegen der Teigschicht (16) um die Wurst (12) an deren Längsbereich (18a) zwei weitere Teilflächen (20, 22) der Teigschicht (16) aufeinander gelegt werden.

10. Verfahren nach einem der Ansprüche 7 bis 9,
bei dem das Herumlegen der Teigschicht (16) um die Wurst (12) an deren Längsbereich (18a) zeitlich vor dem Aneinanderlegen der mindestens zwei Teilflächen (28, 30) der Teigschicht (16) an dem mindestens einen Endbereich (18b, 18c) der Wurst (12) erfolgt.
